# EUROPÄISCHE PATENTANMELDUNG

(11) **EP 2 213 373 A2**
(43) Veröffentlichungstag der Anmeldung: **04.08.2010**
(21) Anmeldenummer: 10000762.4
(22) Anmeldetag: 26.01.2010
(51) Int. Cl.: B01J 47/00, B01J 49/00, G21F 9/30

(54) **Verfahren und Vorrichtung zur Behandlung eines Ionenaustauscherharzes**

(30) Priorität: 28.01.2009 DE 102009006518
(71) Anmelder: Areva NP GmbH, 91052 Erlangen (DE)
(72) Erfinder: Blase, Michael, 63538 Großkrotzenburg (DE)
(74) Vertreter: Tergau & Pohl Patentanwälte

(57) **Zusammenfassung**

Aufgabe der vorliegenden Erfindung ist es, ein Verfahren zur Vorbehandlung eines Ionenaustauscherharzes (H) anzugeben, durch welches das zur Endlagerung in einem Gebinde - insbesondere in einer Zementmatrix oder in einer Betonmatrix - bestimmte Ionenaustauscherharz (H) eine möglichst langfristige Produktstabilität aufweist. Dazu wird erfindungsgemäß ein mit einer ersten Art von Ionen (K1) beladenes oder gesättigtes Ionenaustauscherharz (H) aus einer kerntechnischen Anlage vor einer Zwischen- oder Endlagerung mit einer gleichnamig geladene Ionen (K2) einer zweiten Art enthaltenden Lösung (L) behandelt, wobei es zur Ausbildung einer Substitution der Ionen (K1) der ersten Art durch die Ionen (K2) der zweiten Art kommt, bei der die Ionen (K2) der zweiten Art die Ionen (K1) der ersten Art partiell oder vollständig aus dem Ionenaustauscherharz (H) verdrängen..

## Beschreibung

Die Erfindung betrifft ein Verfahren und eine Vorrichtung zur Vorbehandlung eines Ionenaustauscherharzes aus einer kerntechnischen Anlage vor einer Zwischen- oder Endlagerung.

In einer kerntechnischen Anlage, beispielsweise in einer Kernkraftwerksanlage, werden Abwasser- und/oder Kondensatwasserströme üblicherweise einer Reinigung unterzogen. Des Weiteren kann beispielsweise eine vorzugsweise kontinuierliche Reinigung von Flüssigkeitsströmen im Bereich des Primärkreislaufes von Druckwasserreaktoranlagen vorgesehen sein. Im Zuge einer solchen Zwischen- oder Endreinigung können Ionenaustauscherharze in Bettform - beispielsweise als Mischbettfilter - oder in Form von Anschwemmschichten zur Anwendung gelangen. Die Ionenaustauscherharze, beispielsweise auf Kunstharzbasis mit einem Polymergerüst, dienen vorwiegend zur Entionisierung oder Entsalzung des jeweiligen Flüssigkeitsstroms bzw. zum Austausch von in der Flüssigkeit gelösten Ionen gegen zuvor im lonentauscherharz gebundene Ionen mit gleichem Ladungsvorzeichen.

Je nach anfallender Ionenart werden kationische und/oder anionische lonenaustauscherharze eingesetzt. Das jeweilige Ionenaustauscherharz kann dabei in Pulverform als Pulverharz vorliegen, oder alternativ dazu in Form von Kugeln als Kugelharz. Die als Reinigungs- und/oder als Filtermaterial verwendeten lonenaustauscherharze werden nach ihrem Gebrauch bzw. nach der Erschöpfung ihres Regenerationsvermögens als radioaktiv belastete Abfallprodukte einer Zwischen- oder Endlagerung zugeführt, gegebenenfalls nach einer auch als Konditionierung bezeichneten Behandlung zur Erhöhung der Produktbeständigkeit. Eine solche Behandlung umfasst in der Regel eine chemische, thermische, oder mechanische Behandlung beispielsweise zur Einstellung des pH-Wertes bzw. zur Einstellung der Korngröße des Ionenaustauscherharzes zum Zwecke der Verminderung von dessen Quellvermögen. Zur Vorbereitung einer zeitlich möglichst beständigen Endlagerung wird üblicherweise das jeweilige Ionenaustauscherharz in eine Gebindematrix, insbesondere in eine Zement-, Beton- oder Bitumenmatrix eingebunden.

Wie sich erst kürzlich herausgestellt hat, können bei einem in einer Zement- oder Betonmatrix abgebunden Ionenaustauscherharz unter ungünstigen Umständen Treiberscheinungen auftreten, welche im Laufe der Zeit zu einem Verlust an Druckstabilität und struktureller Integrität und im Extremfall sogar zu einer weitgehenden Zerstörung der Matrix sowie einer Zerstörung der die Matrix umgebenden Gebinde führen. Durch die Treiberscheinungen wird in der Matrix ein Innendruck aufgebaut, durch welchen im Zement oder Beton und in den die Zement- oder Betonmatrix umgebenden Gebinden zunächst Spannungen auftreten, die dann zu Haarrissen und mit der Zeit zu sich vergrößernden Rissen führen. Auf diese Weise kann die Lagerbeständigkeit eines derartig abgebundenen Ionenaustauscherharzes drastisch reduziert sein. Insbesondere bei einem radioaktiv belasteten Ionenaustauscherharz, welches zur Endlagerung einzementiert oder einbetoniert wurde, könnte durch die Zersetzung der Gebinde und infolge dessen insbesondere bei einer oberflächennahen Lagerung über in die Risse eindringendes und wieder austretendes Wasser Radioaktivität in die Umwelt gelangen.

Aufgabe der Erfindung ist es daher, ein Verfahren zur Vorbehandlung eines Ionenaustauscherharzes anzugeben, durch welches das zur Endlagerung in einem Gebinde - insbesondere in einer Zementmatrix oder in einer Betonmatrix - bestimmte Ionenaustauscherharz eine möglichst langfristige Produktstabilität aufweist. Des Weiteren soll eine zur Durchführung des Verfahrens geeignete Vorrichtung angegeben werden.

Im Bezug auf das Verfahren wird die genannte Aufgabe erfindungsgemäß durch die Merkmale des Anspruchs 1 gelöst.

Demnach ist ein Verfahren zur Vorbehandlung eines mit einer ersten Art von Ionen beladenen oder gesättigten Ionenaustauscherharzes aus einer kerntechnischen Anlage vor einer Zwischen- oder Endlagerung vorgesehen, wobei zur Ausbildung einer Substitution der Ionen der ersten Art durch gleichnamig geladene Ionen einer zweiten Art, bei dem die Ionen der zweiten Art die Ionen der ersten Art partiell oder vollständig aus dem Ionenaustauscherharz verdrängen, das Ionenaustauscherharz mit einer Lösung mit den Ionen der zweiten Art behandelt wird.

Wie sich im Rahmen von vergleichsweise aufwändigen und komplexen Untersuchungen der Anmelderin herausgestellt hat, liegt den für die Zerstörung der Gebindematrix ursächlichen Treiberscheinungen ein Kristallwachstum im Bereich der Grenzschichten zwischen dem Ionenaustauscherharz und der Gebindematrix zugrunde. Sind in dem die eingelagerten Ionenaustauscherharzpartikel oder -kugeln umschließenden Gebinde Ionen einer zweiten Art enthalten, die eine höhere Affinität zu den aktiven Zentren des Ionenaustauscherharzes aufweisen als die Ionen der ersten Art, mit denen das Ionenaustauscherharz ursprünglich beladen oder gesättigt ist, so werden die Ionen der ersten Art von den Ionen der zweiten Art aus dem eingebundenen Ionenaustauscherharz verdrängt. Hierdurch werden im Bereich der Grenzschichten Ionenwanderungen induziert, bei denen Ionen der ersten Art aus dem Ionenaustauscherharz ausdiffundieren und durch gleichzeitig aus der Gebindematrix in das Ionenaustauscherharz eindiffundierende Ionen substituiert werden. Als Folge eines solchen lonendiffusions- und Substitutionsprozesses bildet sich innerhalb der Gebindematrix im Bereich der Grenzschichten ein Ionenkonzentrationsgefälle aus, das zu einer Kristallbildung führen kann. Auf diese Weise kann sich eine wachsende Kristallschicht um die in der Gebindematrix eingebundenen Ionenaustauscherharzpartikel oder -kugeln ausbilden, durch deren Kristallisationsdruck, der bei zunehmender Größe der Kristalle zunimmt, die Gebindematrix mechanisch belastet und letztlich zersetzt wird.

Die Erfindung geht daher von der Überlegung aus, den bislang im abgebundenen und endgelagerten Zustand des Ionenaustauscherharzes stattfindenden und letztlich zu einer Zerstörung der Gebindematrix führenden lonendiffusions- und Substitutionsprozess stattdessen gezielt im Zuge eines noch vor der Einbringung in die Gebindematrix durchzuführenden Behandlungsschrittes stattfinden zu lassen, indem das Ionenaustauscherharz mit einer vergleichsweise konzentrierten Lösung mit den Ionen der zweiten Art behandelt wird. Nach einem weitestgehenden Ionenaustausch mit der Lösung reduziert sich der später noch stattfindende lonendiffusions- und Substitutionsprozess im abgebundenen und endgelagerten Zustand des Ionenaustauscherharzes auf eine statistisch marginale Ereignisverteilung, die nicht mehr relevant ist. Ein nennenswertes lokales Kristallwachstum an der Grenzschicht zwischen dem Ionenaustauscherharz und dem umliegenden Gebinde findet dann nicht mehr statt.

Ein wesentlicher Vorzug der Vorbehandlung des Ionenaustauscherharzes mit einer Lösung ist es, dass dabei der Austausch der Ionen der ersten Art mit den Ionen der zweiten Art um Größenordnungen schneller vonstatten geht als im abgebundenen Zustand des Ionenaustauscherharzes in einer Gebindematrix. Dieses Verfahren zur Vorbehandlung ist somit ohne signifikanten zeitlichen Zusatzaufwand im Verbund mit anderen Vorbehandlungsprozessen chemischer, thermischer oder mechanischer Art praktikabel.

Vorzugsweise ist das Verfahren zur Vorbehandlung des Ionenaustauscherharzes dahingehend ausgestaltet, dass die Behandlung des Ionenaustauscherharzes ein Eintauchen in eine Lösung mit den Ionen der zweiten Art umfasst, wobei ggf. für eine vorgegebene Zeitdauer zur selbsttätigen Durchmischung eine Lagerung des Ionenaustauscherharzes in der Lösung und/oder unter Anwendung einer Mischungsvorrichtung eine aktive Durchmischung des Ionenaustauscherharzes mit der Lösung vorgesehen sein kann. Die Zeitdauer kann dabei jeweils in Abhängigkeit eines vorgegebenen (prozentualen) Grades des Austauschs der Ionen der ersten Art durch die Ionen der zweiten Art in dem Ionenaustauscherharz bestimmt sein. Durch eine aktive Durchmischung kann insbesondere der Ionenaustausch in geeigneter Weise beschleunigt werden, da somit die effektive Grenzfläche zwischen der Lösung mit den Ionen der zweiten Art und dem Ionenaustauscherharz, an welcher die Ionendiffusionsprozesse stattfinden, erhöht wird.

Für den Fall, in dem das Ionenaustauscherharz ein Kationenaustauscherharz ist, beispielsweise ein Kationenaustauscherkugelharz, so sind per Definition die Ionen der ersten Art als Kationen gegeben.

In dem Verfahren zur Vorbehandlung des Ionenaustauscherharzes werden in diesem Fall die Ionen der zweiten Art, welche zu den Ionen der ersten Art gleichnamig geladen und somit ebenfalls Kationen sind, bevorzugterweise in einer Metallhydroxidlösung bereitgestellt. Kationen - insbesondere Kationen der Alkali- und Erdalkalimetalle - bilden mit Hydoxidionen zumeist leicht wasserlösliche, alkalische Salze. Solche Salze sind somit kostengünstig in geeigneten Mengen verfügbar, so dass sich die gewünschte Behandlungslösung leicht herstellen lässt.

In einem bevorzugten Anwendungsfall des Verfahrens liegen die Ionen der ersten Art als Ionen der Alkalimetalle, insbesondere als Lithiumionen, vor. Die insbesondere beim Reaktorbetrieb von Druckwasserreaktoren erfolgende Beladung des Ionenaustauscherharzes mit Lithium konnte überraschenderweise als hauptverantwortlich für die bereits geschilderten Treiberscheinungen bei der Endlagerung im abgebundenen Zustand identifiziert werden, während der zunächst im Verdacht stehende Einfluss einer Borartbeladung sich als vergleichsweise weniger relevant herausgestellt hat. In dieser Verfahrensvariante sind die Ionen der zweiten Art vorzugsweise als Calciumionen gegeben und werden in einer wässrigen Calciumhydroxidtösung bereitgestellt.

Lithiumionen weisen zu den aktiven Kationenaustauscherzentren in einem Kationentauscherharz in der Regel eine geringere Affinität auf als Calciumionen, die als Bestandteile von Klinkermineralien in großen Mengen in Zement und Beton vorkommen. In frisch zubereiteter Zement- oder Betonmasse wird durch eine Hydrolyse der enthaltenen Klinkermineralien eine gesättigte wässrige Calciumhydroxidlösung freigesetzt. In dieser Lösung liegen frei bewegliche Calciumionen vor, welche Diffusionsströme ausbilden können. Ist das Gebinde, welches ein mit Lithiumionen beladenes Ionenaustauscherharz umschließt, durch eine Zement- oder Betonmatrix gegeben, so setzt nach der Zementierung oder Betonierung des Ionentauscherharzes ein Ionendiffusionsprozess ein, bei dem Lithiumionen aus dem Ionenaustauscherharz durch Calciumionen substituiert werden. Daraus resultiert eine Freisetzung von Lithiumionen, was zu einer Anhebung des pH-Wertes in der Gebindematrix führt. Da bei zunehmendem pH-Wert die Löslichkeit von Calciumhydroxid in Wasser sinkt, kristallisiert feinkörniges Calciumhydroxid an der Grenzfläche zwischen einer Kationenaustauscherharzkugel und der sie umgebenden Matrix und bildet eine diffusionshemmende Sperrschicht. Durch diese Sperrschicht wird ein Konzentrationsgefälle frei beweglicher Calciumionen gebildet, mit einer niedrigen Calciumionenkonzentration zwischen der Oberfläche der Kationenaustauscherharzkugel und der diffusionshemmenden Sperrschicht, und mit einer vergleichsweise hohen Calciumionenkonzentration in der umgebenden, sich im Erstarrungsprozess befindenden Zement- oder Betonmatrix. Da durch das in der Zement- oder Betonmatrix vorhandene Wasser Ionenwanderungen und daraus resultierende Ausgleichsvorgänge weiterhin gegeben sind, setzten Ausgleichsdiffusionen ein, im Zuge derer Calciumionen aus Bereichen mit hoher Calciumionenkonzentration in Bereiche mit relativ niedriger Calciumionenkonzentration und mit reduzierter Calciumhydroxidlöslichkeit in den Umgebungsbereich der Außenfläche der Kationenaustauscherharzkugel diffundieren. Dabei kristallisiert Portlandit, insbesondere in Form von hexagonalen Kristallen. Bei fortschreitendem Wachstum der Portlanditkristalle nimmt bei zunehmender Kristallgröße auch der Kristallisationsdruck zu, welcher bei einer Überschreitung der Druckfestigkeit der umgebenden Zement- oder Betonmatrix letztlich zu Rissbildungen führt.

Bei einer Vorbehandlung des mit Lithiumionen beladenen Ionenaustauscherharzes mit einer wässrigen Calciumhydroxidlösung diffundieren Lithiumionen schon vor der Zementierung oder Betonierung aus dem Ionenaustauscherharz aus. Insbesondere kann durch eine Kontrolle und Einstellung des pH-Wertes der Lösung der pH-Wert konstant gehalten und somit verhindert werden, dass sich an den Kationenaustauscherharzkugeloberflächen im Zuge der Lithiumionenfreisetzung in die Lösung diffusionshemmende Sperrschichten bilden. Somit diffundieren Lithiumionen solange in die Lösung aus, bis im Wesentlichen ein solches Gleichgewichtszustand zwischen Calciumionen und Lithiumionen im Ionenaustauscherharz hergestellt ist, welches sich unter den Bedingungen der Calciumionenkonzentration, die bei der Zementierung oder Betonierung des Ionenaustauscherharzes in der Gebindematrix gegeben ist, einstellen würde.

Durch eine aktive Durchmischung der Calciumionenhydroxidlösung mit dem Ionenaustauscherharz kann die Ausdiffusion der Lithiumionen in vorteilhafter Weise beschleunigt werden, da vermieden wird, dass sich im Bereich um die Kationenaustauscherharzkugeloberflächen lokal erhöhte Lithiumionenkonzentrationen bilden können, durch welche sich das Diffusionsgleichgewicht hin zu einer vergleichsweise langsameren Ausdiffusion verschieben würde. Weiterhin wird somit die räumliche Homogenisierung des pH-Wertes der Lösung gewährleistet, insbesondere auch bei einer möglichen Hinzufügung eines säurehaltigen Mittels zur globalen Absenkung des pH-Wertes.

In einer bevorzugte Ausführungsvariante des Verfahrens zur Vorbehandlung eines Ionenaustauscherharzes wird das Ionenaustauscherharz im Zuge eines auf die Behandlung mit der Lösung mit den Ionen der zweiten Art zeitlich folgenden Prozessschrittes in einer Matrix eines Bindemittels abgebunden.

Als Bindemittel wird hierbei vorzugsweise ein Zement oder Beton verwendet, oder eine Mischung aus verschiedenen Zement- und/oder Betonsorten. Alternativ dazu kann als Bindemittel auch ein Bitumen vorgesehen sein.

In Bezug auf die Vorrichtung wird die eingangs genannte Aufgabe gelöst durch eine Konditionierungsvorrichtung mit einem Vorlagebehälter zur Aufnahme und ggf. zur chemischen, thermischen und/oder mechanischen Behandlung eines Ionenaustauscherharzes vor einer Zwischen- oder Endlagerung, sowie mit einem Chemikalienbehälter mit einer darin befindlichen Metallhydroxidlösung, wobei eine Zuleitung vorgesehen ist, über welche der Inhalt des Chemikalienbehälters dem Vorlagebehälter zuleitbar ist.

Die Vorrichtung ist vorzugsweise dahingehend weitergebildet, dass eine Pumpe vorgesehen ist, mit welcher der Inhalt des Chemikalienbehälters über die Zuleitung dem Vorlagebehälter zugeleitet wird. Durch eine Einstellung der Pumpleistung kann die Menge des Inhalts des Chemikalienbehälters, die in den Vorlagebehälter geleitet wird, zeitlich variabel und bedarfsgerecht gesteuert werden.

Ferner ist bevorzugterweise an den Vorlagenbehälter oder an den Umwälzkreislauf eine Entnahmeleitung angeschlossen, über die das mit der Lösung aus dem Chemikalienbehälter chemisch vorbehandelte lonentauscherharz nach einer einstellbaren Beaufschlagungsdauer einer Zementierungs-, Betonierungs- oder Bitumierunseinrichtung als weiterem Bestandteil der Konditionierungsvorrichtung zuführbar ist, wo eine Zementierung, Betonierung oder Bitumierung des Ionenaustauscherharzes, vorzugsweise in flüssiger Phase, erfolgt.

Ein Aufführungsbeispiel der Erfindung wird nachfolgend anhand einer Zeichnung näher erläutert. Dabei zeigen:
- Fig. 1: eine Vorrichtung zur Vorbehandlung eines Ionenaustauscherharzes vor einer Zwischen- oder Endlagerung.
- Fig. 2: eine spezielle Variante der Vorrichtung nach Fig. 1 zur Vorbehand- lung eines mit Lithium beladenen Kationenaustauscherharzes.

Einander entsprechende Teile in den beiden Figuren sind mit denselben Bezugszeichen versehen.

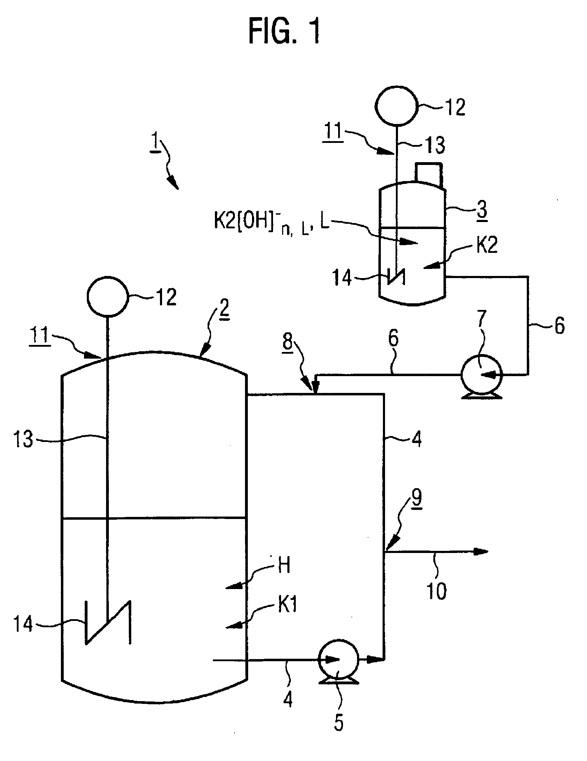

In Fig. 1 ist eine Vorrichtung 1 zur Vorbehandlung eines Ionenaustauscherharzes H vor einer Zwischen- oder Endlagerung dargestellt. Die Vorrichtung 1 umfasst einen Vorlagebehälter 2, einen Chemikalienbehälter 3, einen Umwälzkreislauf 4 mit einer Umwälzpumpe 5 sowie eine Zuleitung 6 mit einer Zuleitungspumpe 7 zur Zuleitung des Inhalts des Chemikalienbehälters 3 in den Vorlagebehälter 2, wobei die Zuleitung 6 an einem Zulauf 8 endseitig in den Umwälzkreislauf 4 mündet. Aus dem Umwälzkreislauf 4 zweigt von einem Ablauf 9 eine Abfluss- oder Entnahmeleitung 10 ab, über welche der Inhalt des Vorlagebehälters 2 einer Weiterverarbeitung in einer nicht dargestellten Zementierungs-, Betonierungs- oder Bitumierunseinrichtung zuleitbar ist. Sowohl dem Vorlagebehälter 2 als auch dem Chemikalienbehälter 3 ist jeweils eine Durchmischungsvorrichtung 11 zur Durchmischung des jeweiligen Inhaltes zugeordnet, umfassend jeweils eine Antriebseinheit 12, eine von der Antriebseinheit 12 drehgetriebene und in den Vorlagebehälter 2 bzw. in den Chemikalienbehälter 3 greifende Drehwelle 13, sowie ein Rührwerk 14.

In den Vorlagebehälter 2 ist das mit Ionen K1 einer ersten Art beladene oder gesättigte Ionenaustauscherharz H eingebracht und wird mit Hilfe der Umwälzpumpe 5 durch den Umwälzkreislauf 4 geleitet. In dem Chemikalienbehälter 3 ist eine wässrige Lösung L eingebracht, welche Ionen K2 einer zweiten Art enthält. Sind die Ionen K1 und K2 der ersten bzw. der zweiten Art als (positiv geladene) Kationen gegeben, so liegt die Lösung L insbesondere in Form einer Kationenhydroxidlösung K₂[OH]⁻_{n, L} vor. Der Index n kennzeichnet hierbei die Ladungszahl der Ionen K2 der zweiten Art. Mit Hilfe der Zuleitungspumpe 7 wird über die Zuleitung 6 und den Zulauf 8 die Lösung L mit den Ionen K2 der zweiten Art in den Umwälzkreislauf 4 geleitet, wo eine Beimengung der Lösung L zu dem Ionenaustauscherharz H erfolgt. Im Zuge einer Anzahl von Durchlaufzyklen des Ionenaustauscherharzes H durch den Umwälzkreislauf 4 wird eine vorgegebene Menge der Lösung L aus dem Chemikalienbehälter 3 dem Ionenaustauscherharz H beigemengt, wobei mit Hilfe der Durchmischungsvorrichtung 11 innerhalb des Vorlagebehälters 2 eine zusätzliche Durchmischung des Ionenaustauscherharzes H mit der Lösung L erfolgt.

Da die Ionen K2 der zweiten Art eine höhere Affinität zu den aktiven lonentauscherzentren des Ionenaustauscherharzes H aufweisen als die Ionen K1 der ersten Art, mit welchen das Ionenaustauscherharz H beladen ist, findet im Zuge der Beimengung und Durchmischung der Lösung L zu bzw. mit dem Ionenaustauscherharz H eine Ionensubstitution in dem Ionenaustauscherharz H statt, bei welcher die Ionen K1 der ersten Art durch die Ionen K2 der zweiten Art aus dem Ionenaustauscherharz H in die Lösung L verdrängt werden. Nach einer gewissen Zeitdauer ist ein stationärer Gleichgewichtszustand erreicht, bei dem die Lösung L im Wesentlichen einen Großteil der Ionen K1 der ersten Art enthält, und bei dem im Wesentlichen keine weitere Ionensubstitution stattfindet. Bei einem Erreichen eines solchen Gleichgewichtszustandes wird mit Hilfe der Umwälzpumpe 5 über die an dem Ablauf 9 aus dem Umwälzkreislauf 4 abzweigende Abflussleitung 10 das Ionenaustauscherharz H mit der Lösung L einer Weiterverarbeitung zugebracht, die eine Abtrennung des Ionenaustauscherharzes H von der Lösung L und eine darauf folgende Zementierung des Ionenaustauscherharzes H umfasst.

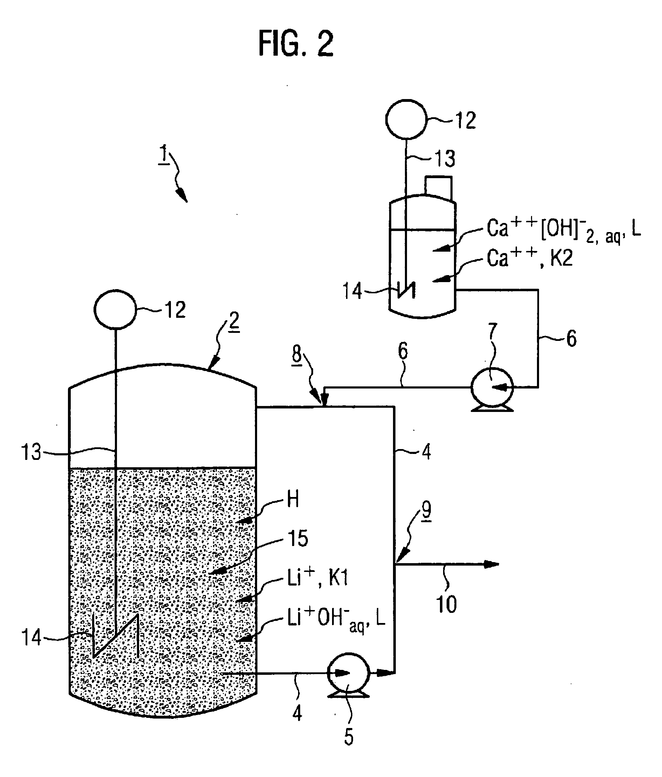

Fig. 2 stellt eine spezielle Variante der Vorrichtung 1 nach Fig. 1 zur Vorbehandlung eines mit - ggf. atomar gebundenen - Lithiumionen Li⁺ beladenen und in Kugelform vorliegenden Ionenaustauscherharzes H vor einer Zwischen- oder Endlagerung dar. Somit ist das Ionenaustauscherharz H als ein Kationenaustauscherkugelharz 15 gegeben, und die Ionen der ersten Art K1 sind als Lithiumionen, Li⁺ gegeben. Die Ionen K2 der zweiten Art liegen als zweifach positiv geladene Calciumionen Ca⁺⁺ in einer wässrigen Calciumhydroxidlösung Ca⁺⁺[OH]⁻_{2, aq} vor, die in dem Chemikalienbehälter 3 bevorratet ist. Somit liegt die Lösung L anfänglich als wässrige Calciumhydroxidlösung Ca⁺⁺[OH]⁻_{2, aq} vor.

In den Vorlagebehälter 2 wird das Kationenaustauscherkugelharz 15 mit den darin enthaltenen Lithiumionen Li⁺ eingebracht. Es wird mit Hilfe der Umwälzpumpe 5 durch den Umwälzkreislauf 4 geleitet. Mit Hilfe der Zuleitungspumpe 7 wird über die Zuleitung 6 und den Zulauf 8 die wässrige Calciumhydroxidlösung Ca⁺⁺[OH]⁻_{2, aq} in den Umwälzkreislauf 4 geleitet, wo eine Beimengung der Caiciumhydroxidlösung Ca⁺⁺[OH]⁻_{2, aq} zu dem Kationenaustauscherkugelharz 15 erfolgt. Im Zuge einer Anzahl von Durchlaufzyklen des Kationenaustauscherkugelharzes 15 durch den Umwälzkreislauf 4 wird eine vorgegebene Menge der wässrigen Calciumhydroxidlösung Ca⁺⁺[OH]⁻_{2, aq} aus dem Chemikalienbehälter 3 dem Kationenaustauscherkugelharz 15 beigemengt, wobei mit Hilfe der Durchmischungsvonichtung 11 innerhalb des Vorlagebehälters 2 eine zusätzliche Durchmischung des Kationenaustauscherkugelharzes 15 mit der wässrigen Calciumhydroxidlösung Ca⁺⁺[OH]⁻_{2, aq} erfolgt.

Da Calciumionen Ca⁺⁺ eine höhere Affinität zu den aktiven lonentauscherzentren des Kationenaustauscherkugelharzes 15 aufweisen als Lithiumionen Li⁺ , mit welchen das Kationenaustauscherkugelharz 15 anfänglich beladen ist, findet im Zuge der Beimengung und Durchmischung der wässrigen Calciumhydroxidlösung Ca⁺⁺[OH]⁻_{2, aq} zu bzw. mit dem Kationenaustauscherkugelharz 15 eine lonensubstitution in dem Kationenaustauscherkugelharz 15 statt, bei welcher Lithiumionen Li⁺ durch Calciumionen Ca⁺⁺ aus dem Kationenaustauscherkugelharz 15 verdrängt werden. Dabei bilden die in der Lösung L verbleibenden Hydoxidionen OHmit den in die Lösung L freigesetzten Lithiumionen Li⁺ eine wässrige Lithiumhydroxidlösung Li⁺OH⁻ _{aq}, so dass im Zuge der Ionensubstitution in dem Kationenaustauscherkugelharz 15 eine korrespondierende, inverse Ionensubstitution in der Lösung L erfolgt. Nach einer Zeitdauer ist ein stationärer Gleichgewichtszustand erreicht, bei dem die Lösung L im Wesentlichen als wässrige Lithiumhydroxidlösung Li⁺OH⁻ _{aq} vorliegt und bei dem im Wesentlichen keine weitere lonensubstitution stattfindet. Bei einem Erreichen eines solchen Gleichgewichtszustandes wird mit Hilfe der Umwälzpumpe 5 über die an dem Ablauf 9 aus dem Umwälzkreislauf 4 abzweigende Abflussleitung 10 das Kationenaustauscherkugelharz 15 mit der Lösung L einer Weiterverarbeitung zugebracht, die eine Abtrennung des Kationenaustauscherkugelharzes 15 von der Lösung L und eine darauf folgende Zementierung des Kationenaustauscherkugelharzes 15 umfasst. Die zementierten Gebinde werden dann beispielsweise in geeignete Lager- bzw. Transportbehälter gefüllt und einer Zwischen- oder Endlagerung zugeführt.

### Bezugszeichenliste

- 1.: Vorrichtung
- 2.: Vorlagebehälter
- 3.: Chemikalienbehälter
- 4.: Umwälzkreislauf
- 5.: Umwälzpumpe
- 6.: Zuleitung
- 7.: Zuleitungspumpe
- 8.: Zulauf
- 9.: Ablauf
- 10.: Abflussleitung
- 11.: Durchmischungsvorrichtung
- 12.: Antriebseinheit
- 13.: Drehwelle
- 14.: Rührwerk
- 15.: Kationenaustauscherkugelharz

- K1: Ionen erster Art
- K2: Ionen zweiter Art
- H: Ionenaustauscherharz
- L: Lösung
- K2[OH]⁻_{n, L}: Kationenhydroxidlösung mit Kationen zweiter Art
- Ca⁺⁺[OH]⁻_{2, aq}: wässrige Calciumhydroxidlösung
- Li⁺OH⁻ _{aq}: wässrige Lithiumhydroxidlösung
- OH⁻: Hydroxidion

## Patentansprüche

1. Verfahren zur Vorbehandlung eines mit einer ersten Art von Ionen (K1) beladenen oder gesättigten Ionenaustauscherharzes (H) aus einer kerntechnischen Anlage vor einer Zwischen- oder Endlagerung, wobei zur Ausbildung einer Substitution der Ionen (K1) der ersten Art durch gleichnamig geladene Ionen (K2) einer zweiten Art, bei der die Ionen (K2) der zweiten Art die Ionen (K1) der ersten Art partiell oder vollständig aus dem Ionenaustauscherharz (H) verdrängen, das Ionenaustauscherharz (H) mit einer die Ionen (K2) der zweiten Art enthaltenden Lösung (L) behandelt wird.

2. Verfahren nach Anspruch 1, wobei das Ionenaustauscherharz (H) zur Behandlung in die Lösung (L) mit den Ionen (K2) der zweiten Art eingetaucht oder von dieser umspült wird, so dass es zu einer selbsttätigen Durchmischung des Ionenaustauscherharzes (H) mit der Lösung (L) kommt, und/oder wobei unter Anwendung einer Durchmischungsvorrichtung (11) eine aktive Durchmischung des Ionenaustauscherharzes (H) mit der Lösung (L) herbeigeführt wird.

3. Verfahren nach Anspruch 1 oder 2, wobei die Ionen (K1) der ersten Art als Kationen gegeben sind

4. Verfahren nach Anspruch 3, wobei die Ionen (K1) der ersten Art als Alkaliionen, insbesondere als Lithiumionen (Li⁺), vorliegen.

5. Verfahren nach einem der Ansprüche 1 bis 4, wobei die Ionen (K2) der zweiten Art in einer Metallhydroxidlösung (K2[OH]⁻_{n,L}) bereitgestellt werden.

6. Verfahren nach Anspruch 5, wobei die Ionen (K2) der zweiten Art als Calciumionen (Ca⁺⁺) vorliegen und in einer wässrigen Calciumhydroxidlösung (Ca⁺⁺[OH]⁻_{2, aq}) bereitgestellt werden.

7. Verfahren nach einem der Ansprüche 1 bis 6, wobei das Ionenaustauscherharz (H) im Zuge eines auf die Behandlung mit der Lösung (L) mit den Ionen (K2) der zweiten Art zeitlich folgenden Prozessschrittes in einer Matrix eines Bindemittels abgebunden wird.

8. Verfahren nach Anspruch 7, wobei als Bindemittel ein Zement, Beton oder ein Bitumen verwendet wird.

9. Konditionierungsvorrichtung (1) zur Durchführung des Verfahrens nach einem der Ansprüche 1 bis 8, umfassend einen Vorlagebehälter (2) zur Aufnahme eines Ionenaustauscherharzes (H) sowie einen Chemikalienbehälter (3) mit einer Metallhydroxidlösung (K2[OH]⁻_{n,L}), wobei eine Zuleitung (6) vorgesehen ist, über welche der Inhalt des Chemikalienbehälters (3) dem Vorlagebehälter (2) zuleitbar ist.

10. Konditionierungsvorrichtung (1) nach Anspruch 9, deren Vorlagebehälter (2) in einen Umwälzkreislauf (4) mit einer Umwälzpumpe (5) geschaltet ist, wobei an den Umwälzkreislauf (4) eine Entnahmeleitung angeschlossen ist, über die das in Lösung befindliche, chemisch vorbehandelte lonentauscherharz (H) einer Zementierungs-, Betonierungs- oder Bitumierungseinrichtung zuführbar ist.
